(19) Europäisches Patentamt / European Patent Office / Office européen des brevets

(11) **EP 3 010 746 B1**

(12) **FASCICULE DE BREVET EUROPEEN**

(45) Date de publication et mention
de la délivrance du brevet:
**10.05.2017 Bulletin 2017/19**

(21) Numéro de dépôt: **14731740.8**

(22) Date de dépôt: **28.05.2014**

(51) Int Cl.:
*B60L 3/00* *(2006.01)*   *B60L 15/20* *(2006.01)*
*F02D 41/22* *(2006.01)*

(86) Numéro de dépôt international:
**PCT/FR2014/051251**

(87) Numéro de publication internationale:
**WO 2014/202858 (24.12.2014 Gazette 2014/52)**

(54) **SYSTEME ET PROCEDE DE SURVEILLANCE DU COUPLE FOURNI PAR LE MOTEUR D'UN VEHICULE AUTOMOBILE ELECTRIQUE OU HYBRIDE**

SYSTEM UND VERFAHREN ZUR ÜBERWACHUNG DES DURCH DEN MOTOR EINES ELEKTRO- ODER HYBRIDMOTORFAHRZEUGS ERZEUGTEN DREHMOMENTS

SYSTEM AND METHOD FOR MONITORING THE TORQUE SUPPLIED BY THE MOTOR OF AN ELECTRIC OR HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2013 FR 1355620**

(43) Date de publication de la demande:
**27.04.2016 Bulletin 2016/17**

(73) Titulaire: **Renault S.A.S.**
**92100 Boulogne-Billancourt (FR)**

(72) Inventeur: **MARSILIA, Marco**
**F-92100 Boulogne Billancourt (FR)**

(56) Documents cités:
**WO-A1-2004/042884     US-A1- 2005 000 276**
**US-A1- 2012 109 431**

EP 3 010 746 B1

**Description**

L'invention a pour domaine technique le contrôle d'un groupe motopropulseur de véhicule automobile, et plus particulièrement la surveillance du couple fourni par le moteur d'un véhicule électrique ou hybride.

Pour assurer la sécurité de conduite, il est nécessaire de surveiller que le couple demandé par le conducteur via la pédale d'accélérateur par exemple, est correctement réalisé par le véhicule.

Cette surveillance est notamment réalisable, pendant les phases où le couple demandé par le conducteur ne varie pas ou varie de façon peu dynamique.

La surveillance permet de détecter les situations:

- où le couple réalisé par le moteur est anormalement supérieur au couple demandé par le conducteur, également appelé requête de couple du conducteur, et
- où le couple réalisé par le moteur est anormalement inférieur au couple demandé par le conducteur.

La détection de telles situations, communément appelées «événements indésirables client» (acronyme EIC), est essentielle car elle permet, ensuite, d'appliquer le mode dégradé le plus approprié pour assurer la sécurité du conducteur et du véhicule. Cela se concrétise par exemple par une mise à zéro du couple, un allumage d'un voyant au tableau de bord pour informer le conducteur, ou une interdiction de roulage.

De l'état de la technique, on connait les documents US2009066281, US2005050965, US2010042276, US20050000276 et FR1254994. Tous ces documents divulguent des stratégies de surveillance de couple basées sur la comparaison à un seuil de tolérance de la différence entre la requête de couple du conducteur et un ou plusieurs couples estimés.

Il existe un besoin pour la détection d'un écart anormal entre requête de couple et couple réalisé ainsi que la détection d'une variation anormale de cet écart.

Il existe également un besoin pour une interprétation de la situation en cours lorsque l'on détecte un écart entre requête de couple et couple réalisé et/ou que l'on détecte une variation anormale de cet écart.

Un objet de la présente demande est un système de surveillance du couple fourni par le moteur d'un véhicule automobile, notamment d'un véhicule électrique ou hybride, selon la revendication 1. Les moyens de détection des anomalies de couple peuvent être aptes à construire chacun un gabarit de couple acceptable comprenant une limite haute et une limite basse en fonction de la requête de couple, de la valeur de pourcentage d'erreur moyen mesurée sur une période de durée mémorisée s'étendant avant le début d'une phase de variation quasi-statique de la requête de couple du conducteur et de paramètres mémorisés relatifs à l'erreur acceptable et à la variation d'erreur acceptable existant entre la requête de couple et l'estimation de couple.

Un premier moyen de détection des anomalies de couple peut être apte à détecter une perte de motricité, un freinage intempestif et une accélération intempestive dans le cas où la requête de couple du conducteur est positive. Ces détections peuvent être réalisées en fonction de la requête de couple du conducteur, de l'estimation du couple réalisé par le groupe motopropulseur, d'un booléen de détection de phase de variation quasi-statique, d'une valeur de pourcentage d'erreur moyen mesurée sur une période de durée mémorisée s'étendant avant le début d'une phase de variation quasi-statique de la requête de couple du conducteur, d'un booléen de mise à jour de la valeur de pourcentage d'erreur moyenne mesurée sur une période de durée mémorisée s'étendant avant le début d'une phase de variation quasi-statique de la requête de couple du conducteur et du gabarit de couple acceptable.

Un deuxième moyen de détection des anomalies de couple peut être apte à détecter une accélération intempestive dans le cas où la requête de couple du conducteur est négative, un sur-freinage, et une perte de freinage. Ces détections peuvent être réalisées en fonction de la requête de couple du conducteur, de l'estimation du couple réalisé par le groupe motopropulseur, et du booléen de détection de phase de variation quasi-statique, de la valeur de pourcentage d'erreur moyen mesurée sur une période de durée mémorisée s'étendant avant le début d'une phase de variation quasi-statique de la requête de couple du conducteur, du booléen de mise à jour de la valeur de pourcentage d'erreur moyenne mesurée sur une période de durée mémorisée s'étendant avant le début d'une phase de variation quasi-statique de la requête de couple du conducteur et du gabarit de couple acceptable.

Un autre objet de la présente demande est un procédé de surveillance du couple fourni par le moteur d'un véhicule automobile, notamment d'un véhicule électrique ou hybride, selon la revendication 5. On peut construire un gabarit comprenant une limite haute et une limite basse en fonction de la requête de couple, de la valeur de pourcentage d'erreur moyenne entre la requête de couple et l'estimation du couple réalisé, mesurée sur une période de durée mémorisée s'étendant avant le début d'une phase de variation quasi-statique de la requête de couple du conducteur et de paramètres mémorisés relatifs à l'erreur acceptable et à la variation d'erreur acceptable existant entre la requête de couple et l'estimation de couple.

Lors d'une phase de variation quasi-statique lorsque la requête de couple du conducteur est positive, si l'estimation de couple dépasse la limite haute du gabarit, on peut déterminer que l'anomalie de couple détectée est une accélération intempestive lorsque la requête de couple du conducteur est positive.

Par requête de couple du conducteur positive, on entend une requête de couple tendant à accélérer le véhicule qui se déplace en marche avant avec une vitesse positive.

Lors d'une phase de variation quasi-statique lorsque la requête de couple du conducteur est positive si l'estimation de couple devient inférieur à la limite basse du gabarit, on peut déterminer que l'anomalie de couple détectée est une perte de motricité.

Lors d'une phase de variation quasi-statique lorsque la requête de couple du conducteur est négative, si l'estimation de couple devient inférieure à la limite basse du gabarit, on peut déterminer que l'anomalie de couple détectée est un sur-freinage.

Par requête de couple du conducteur négative, on entend une requête de couple tendant à ralentir le véhicule qui se déplace en marche avant avec une vitesse positive.

Lors d'une phase de variation quasi-statique lorsque la requête de couple du conducteur est négative, si l'estimation de couple dépasse la limite haute du gabarit, on peut déterminer que l'anomalie de couple détectée est une perte de freinage.

Lors d'une phase de variation quasi-statique lorsque la requête de couple du conducteur est positive et si l'estimation du couple réalisé par le groupe motopropulseur est, à la fois négative et inférieure à un seuil spécifique au cas d'une requête de couple du conducteur positive et inférieure à la requête de couple du conducteur d'une valeur au moins égale à la valeur d'un autre seuil spécifique au cas d'une requête de couple du conducteur positive, on peut déterminer que l'anomalie de couple est un freinage intempestif.

Lors d'une phase de variation quasi-statique lorsque la requête de couple du conducteur est négative et si l'estimation du couple réalisé par le groupe motopropulseur est, à la fois, positive et supérieure à un seuil spécifique au cas d'une requête de couple du conducteur négative, et supérieure à la requête de couple du conducteur d'une valeur au moins égale à la valeur d'un autre seuil spécifique au cas d'une requête de couple du conducteur négative, on peut déterminer que l'anomalie de couple est une accélération intempestive.

Le procédé et le système réalisent ainsi la surveillance non seulement de l'erreur entre la requête de couple du conducteur et l'estimation du couple réalisé par le moteur mais également de la variation de cette erreur dans le temps.

De plus, le procédé et le système réalisent une surveillance limitée aux phases où la requête de couple du conducteur ne varie pas ou varie de façon peu dynamique en évitant ainsi les «fausses détections» d'EICs liées aux dépassements des gabarits pendant les phases de variation dynamique de la requête.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un système de détermination d'une anomalie de couple,
- la figure 2 illustre les principaux éléments d'un moyen de détermination de la cohérence entre requête de couple et couple réalisé,
- la figure 3 illustre les principaux éléments d'un moyen de détermination de la cohérence du couple positif en phase quasi-statique, et
- la figure 4 illustre les principaux éléments d'un moyen de détermination de la cohérence du couple négatif en phase quasi-statique.

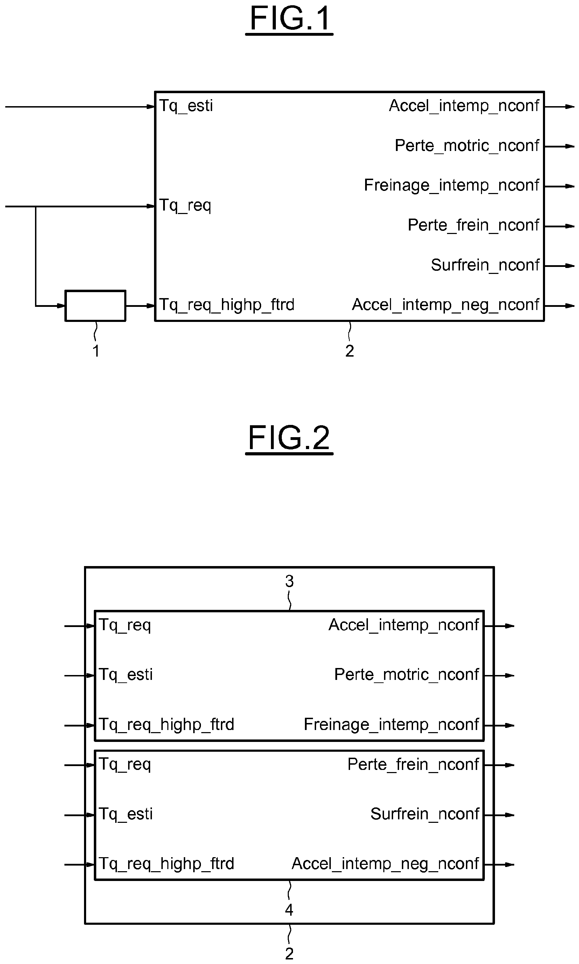

La figure 1 montre le moyen de filtrage 1 de la requête de couple du conducteur qui réalise un filtrage passe haut de la requête de couple du conducteur, notée Tq_req. Plus précisément, le moyen de filtrage 1 de la requête de couple du conducteur réalise un filtrage passe-haut de premier ordre à la pulsation de coupure wc_tq_sp_highp_ftr. La pulsation de coupure est choisie avantageusement pour réduire le bruit du signal.

La fonction de transfert dans le domaine continu de ce filtre est :

$$F(s) = \frac{s}{1 + \dfrac{s}{wc\_tq\_sp\_highp\_ftr}} \qquad (Eq.\ 1)$$

avec s : variable de Laplace.

Le moyen de filtrage 1 de la requête de couple du conducteur émet en sortie la requête de couple du conducteur filtrée, notée Tq_req_highp_ftrd.

Le moyen de détermination 2 de la cohérence entre requête de couple et couple réalisé réalise la vérification de la cohérence entre la requête de couple du conducteur Tq_req et l'estimation du couple réalisé par le moteur Tq_esti. La description ci-dessous est réalisée sur la base d'un véhicule automobile muni d'un moteur électrique. Toutefois, l'homme du métier généralisera l'enseignement de la présente demande à un groupe motopropulseur comprenant notamment, une libre combinaison de moteur thermique et de machines électriques. Le moyen de détermination 2 de la cohérence entre requête de couple et couple réalisé est également illustré par la figure 1, sur laquelle on peut voir qu'il reçoit en entrée l'estimation du couple réalisé par le moteur Tq_esti, la requête de couple du conducteur Tq_req, et la requête de couple du conducteur filtrée Tq_req_highp_ftrd reçue du moyen de filtrage 1 de la requête de couple du conducteur.

L'estimation du couple réalisé par le moteur Tq_esti peut être déterminée, par exemple, par mesure des courants statoriques et rotoriques.

La requête de couple du conducteur Tq_req traduit la volonté du conducteur d'accélérer ou de décélérer et peut être déterminée, par exemple, en fonction de l'enfoncement de la pédale d'accélérateur.

Le moyen de détermination 2 de la cohérence entre requête de couple et couple réalisé émet en sortie des signaux de détection d'une anomalie de l'écart entre le couple réalisé et le couple requis et/ou d'une variation anormale de cet écart. Les anomalies de couple font partie des évènements indésirables pour le conducteur (acronyme EIC).

Les signaux de détection d'une anomalie de couple comprennent des signaux portant un booléen de détection d'une accélération intempestive lorsque la requête de couple du conducteur est positive, noté Accel_intemp_nconf, un booléen de détection d'une accélération intempestive lorsque la requête de couple du conducteur est négative, noté Accel_intemp_neg_nconf, un booléen de détection d'une situation de perte de motricité, noté Perte_motric_nconf, un booléen de détection de la situation de freinage intempestif, noté Freinage_intemp_nconf, un booléen de détection de la situation de sur-freinage, noté Surfrein_nconf, et un booléen de détection de la situation de perte de freinage, noté Perte_frein_nconf.

Par accélération intempestive, on entend la situation où le couple réalisé par le moteur est positif et anormalement supérieur à la requête de couple du conducteur.

Par perte de motricité, on entend que, la requête de couple du conducteur étant positive, le couple réalisé par le moteur, bien que positif, est anormalement inférieur au niveau que le conducteur attend.

Par sur-freinage, on entend que la requête de couple du conducteur est négative mais le couple réalisé par le moteur est anormalement inférieur, tout en demeurant supérieur en valeur absolue, au niveau que le conducteur attend.

Par freinage intempestif, on entend que la requête de couple du conducteur est positive ou nulle mais le couple réalisé par le moteur est négatif.

Par perte de freinage, on entend que la requête de couple du conducteur est négative mais le couple réalisé par le moteur, bien que négatif, est anormalement supérieur, tout en demeurant inférieur en valeur absolue, au niveau que le conducteur attend.

Sur la figure 2, on peut voir que le moyen de détermination 2 de la cohérence entre requête de couple et couple réalisé comprend un moyen de détermination 3 de la cohérence du couple positif et un moyen de détermination 4 de la cohérence du couple négatif.

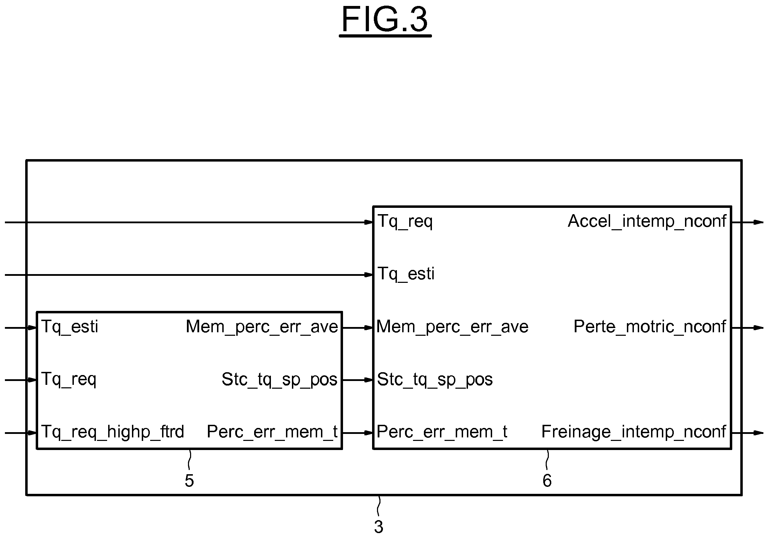

Le moyen de détermination 3 de la cohérence du couple positif réalise la vérification de la cohérence du couple pendant les phases où la requête de couple du conducteur est positive tout en variant de façon « peu dynamique ». Le moyen de détermination 3 de la cohérence du couple positif, illustré par la figure 3, comprend un moyen de détermination 5 des phases de variation quasi-statique de la requête positive et un premier moyen 6 de détection des anomalies de couple.

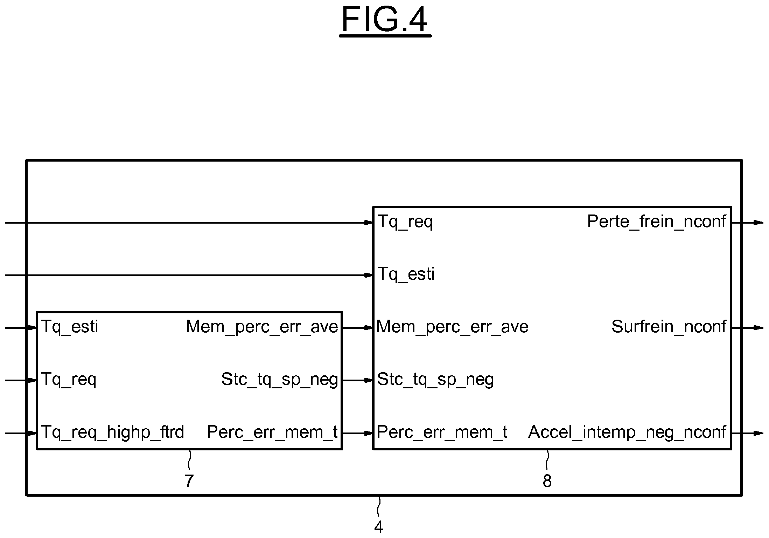

Le moyen de détermination 4 de la cohérence du couple négatif sera décrit plus loin en référence à la figure 4.

Le moyen de détermination 5 des phases de variation quasi-statique de la requête positive détermine les phases pendant lesquelles la requête de couple du conducteur ne varie pas ou varie de façon « peu dynamique ».

Le moyen de détermination 5 des phases de variation quasi-statique de la requête positive reçoit en entrée des signaux portant l'estimation du couple réalisé par le moteur Tq_esti, la requête de couple du conducteur Tq_req, et la requête de couple du conducteur filtrée Tq_req_highp_ftrd reçue du moyen de filtrage 1 de la requête de couple du conducteur.

Le moyen de détermination 5 des phases de variation quasi-statique de la requête positive émet en sortie des signaux portant un booléen de détection de phase de variation quasi-statique lorsque la requête de couple du conducteur est positive, noté stc_tq_sp_pos; une valeur de pourcentage d'erreur moyenne mesurée dans les instants « immédiatement précédents » le début d'une phase de variation quasi-statique de la requête de couple du conducteur, notée mem_perc_err_ave, et un booléen de mise à jour de la valeur de pourcentage d'erreur moyenne mesurée dans les instants « immédiatement précédents » le début d'une phase de variation quasi-statique de la requête de couple du conducteur noté perc_err_mem_t. La notion d'instants « immédiatement précédents » le début d'une phase de variation quasi-statique de la requête de couple du conducteur sera définie plus loin.

Le booléen stc_tq_sp_pos passe de la valeur 0 à la valeur 1 chaque fois que les deux conditions suivantes sont vérifiées :

$|Tq\_req\_highp\_ftrd|$ < Cxx_tq_sp_highp_stc_thd pendant une première durée T1, et

$$Tq\_req \geq -Cxx\_zero\_tq \qquad\qquad (Eq.\ 2)$$

Avec :

Cxx_tq_sp_highp_stc_thd : fréquence en dessous de laquelle on considère que la requête de couple du conducteur varie de façon quasi-statique
T1 : Durée caractéristique d'une variation quasi-statique de la requête de couple du conducteur.
Cxx_zero_tq : couple au-dessus duquel la surveillance réalisée par le moyen de détermination 3 de la cohérence du couple positif est active.

Le début d'une phase de variation quasi-statique est donc détecté lorsque la requête filtrée passe haut Tq_req_highp_ftrd est restée inférieure au seuil Cxx_tq_sp_highp_stc_thd pendant la première durée T1.
Le signal stc_tq_sp_pos passe de la valeur 1 à la valeur 0 chaque fois qu'au moins une des conditions suivantes est vérifiée :

$$\left| Tq\_req\_highp\_ftrd \right| \geq Cxx\_tq\_sp\_highp\_stc\_thd \text{ , ou}$$
$$Tq\_req < -Cxx\_zero\_tq \qquad\qquad (Eq.\ 3)$$

La détermination du signal mem_perc_err_ave va maintenant être décrite. Le signal mem_perc_err_ave prend la valeur moyenne du pourcentage d'erreur perc_err_ave à chaque fois que le booléen perc_err_mem_t prend la valeur 1. Lorsque le booléen perc_err_mem_t prend la valeur 0, le signal mem_perc_err_ave reste figé à sa valeur précédente.
Le signal de moyenne du pourcentage d'erreur perc_err_ave est obtenu en appliquant les équations suivantes :

$$perc\_err = 100 \cdot \frac{Tq\_esti - Tq\_Req}{\max\left(Tq\_Req; Cxx\_tq\_min\_calc\_perc\_err\right)}$$
$$perc\_err\_int = \int_{t0-T2}^{t0} \left(perc\_err\right)dt \qquad\qquad (Eq.\ 4)$$
$$perc\_err\_ave = \frac{perc\_err\_int}{T2}$$

Avec t0 = le début d'une phase quasi-statique de la requête de couple du conducteur, et
Cxx_tq_min_calc_perc_err : Valeur minimale de la requête de couple à prendre en compte pour le calcul du pourcentage d'erreur.

$$T2\ =\ T1/2$$

Il est à noter que la valeur minimale de la requête de couple à prendre en compte pour le calcul du pourcentage d'erreur Cxx_tq_min_calc_perc_err permet d'assurer que la valeur de pourcentage d'erreur perc_err conserve un sens lorsque la valeur de couple requis est très faible. En d'autres termes, la valeur Cxx_tq_min_calc_perc_err et la détermination de la valeur maximale entre la requête de couple Tq_req et la valeur Cxx_tq_min_calc_perc_err permettent d'éviter une situation proche d'une division par zéro.
On détermine donc la variable perc_err_int en intégrant l'erreur pourcentage perc_err entre les instants t0-T2 et T2.
On détermine ensuite la variable perc_err_ave en divisant la variable perc_err_int par la durée d'intégration T2.
Il apparait ainsi que la variable perc_err_int, qui sous-tend la détermination des anomalies de couple, est déterminée sur une période de temps s'étendant de t0-T2 à t0, qui correspond aux instants « immédiatement précédents » le début d'une phase de variation quasi-statique de la requête de couple du conducteur.
Le booléen de mise à jour de la valeur de pourcentage d'erreur moyenne mesurée dans les instants « immédiatement précédents » le début d'une phase de variation quasi-statique de la requête de couple du conducteur, noté perc_err_mem_t, prend la valeur 1 lorsque le signal stc_tq_sp_pos passe d'une valeur 0 à une valeur 1. Le passage à la valeur 1 de ce signal marque le début d'une nouvelle phase de variation quasi-statique de la requête de couple du conducteur.

En d'autres termes, on mémorise donc un nouveau pourcentage d'erreur moyen mem_perc_err_ave chaque fois qu'une nouvelle phase de variation quasi-statique est détectée.

Le premier moyen 6 de détection des anomalies de couple permet de détecter une perte de motricité, un freinage intempestif et une accélération intempestive dans le cas où la requête de couple du conducteur est positive.

Le premier moyen 6 de détection des anomalies de couple reçoit en entrée la requête de couple du conducteur Tq_req, et l'estimation du couple réalisé par le moteur Tq_esti, et reçoit également en entrée, du moyen de détermination 5 des phases de variation quasi-statique de la requête positive, un booléen de détection de phase de variation quasi-statique, noté stc_tq_sp_pos; une valeur de pourcentage d'erreur moyen mesurée dans les instants «immédiatement précédents» le début d'une phase de variation quasi-statique de la requête de couple du conducteur, notée mem_perc_err_ave, un booléen de mise à jour de la valeur de pourcentage d'erreur moyenne mesurée dans les instants «immédiatement précédents» le début d'une phase de variation quasi-statique de la requête de couple du conducteur noté perc_err_mem_t.

Le premier moyen 6 de détection des anomalies de couple émet en sortie le booléen de détection d'une accélération intempestive lorsque la requête de couple du conducteur est positive, noté Accel_intemp_nconf, le booléen de détection d'une situation de perte de motricité, noté Perte_motric_nconf et le booléen de détection de la situation de freinage intempestif, noté Freinage_intemp_nconf.

Le procédé de détermination d'une anomalie de couple comprend la construction d'un gabarit de couple acceptable. Une anomalie est détectée si l'estimation du couple réalisé par le moteur Tq_esti sort de ce gabarit. Le gabarit de couple est construit en fonction de l'erreur statique maximale acceptable entre la requête de couple du conducteur et le couple réalisé par le moteur, du pourcentage d'erreur moyen mesuré dans les instants «immédiatement précédents» le début d'une phase quasi-statique mem_perc_err_ave, et de la variation de la requête de couple du conducteur pendant la phase quasi-statique.

La prise en compte du pourcentage d'erreur moyen mesuré dans les instants «immédiatement précédents» le début d'une phase quasi-statique mem_perc_err_ave, et de la variation de la requête de couple du conducteur pendant la phase quasi-statique permet de surveiller la variation de l'erreur statique.

Le gabarit de couple est délimité par des limites que l'estimation de couple ne doit pas dépasser lorsque la requête de couple du conducteur est positive, la limite haute du gabarit de couple étant notée h_lim_stc_pos et la limite basse du gabarit de couple étant notée 1_lim_stc_pos. Les valeurs de limites haute et basse sont définies par les équations suivantes :

$$\begin{cases} h\_lim\_stc\_pos = \min\left(h\_lim\_err\_stat; h\_lim\_variat\_err\_stat\right) \\ 1\_lim\_stc\_pos = \max\left(1\_lim\_err\_stat; 1\_lim\_variat\_err\_stat\right) \end{cases} (Eq.\ 5)$$

Avec :

h_lim_err_stat : valeur de la borne supérieure d'erreur acceptable
1_lim_err_stat : valeur de la borne inférieure d'erreur acceptable
h_lim_variat_err_stat : valeur de la borne supérieure de variation d'erreur acceptable
1_lim_variat_err_stat : valeur de la borne inférieure de variation d'erreur acceptable

Les valeurs des bornes d'erreur acceptable h_lim_err_stat et 1_lim_err_stat sont fonction respectivement du pourcentage d'erreur acceptable pour la limite haute du gabarit de couple Cxx_perc_err-max_h_pos et du pourcentage d'erreur acceptable pour la limite basse du gabarit de couple Cxx_perc_err_max_1_pos.

$$\begin{cases} h\_lim\_err\_stat = Tq\_req + A \\ 1\_lim\_err\_stat = Tq\_req - B \end{cases} (Eq.\ 6)$$

Avec :

$$A = \max\left( Cxx\_err\_tq\_min\_pos; \frac{Cxx\_perc\_max\_h\_pos}{100} \cdot Tq\_req \right)$$

$$B = \max\left(\text{Cxx\_err\_tq\_min\_pos}; \frac{\text{Cxx\_perc\_max\_1\_pos}}{100} \cdot \text{Tq\_req}\right)$$

Cxx_err_tq_min_pos: erreur acceptable dans le cas d'une requête de couple du conducteur positive.

Cxx_perc_err_max_h_pos : pourcentage d'erreur acceptable pour la limite haute du gabarit de couple dans le cas d'une requête de couple du conducteur positive (en % de la requête de couple du conducteur).

Cxx_perc_err_max_1_pos : pourcentage d'erreur acceptable pour la limite basse du gabarit de couple dans le cas d'une requête de couple du conducteur positive (en % de la requête de couple du conducteur).

Dans les équations Eq. 5, les valeurs des bornes d'erreur acceptable h_lim_variat_err_stat et 1_lim_variat_err_stat permettent de déterminer si la variation de l'écart de couple est anormale. Les équations suivantes permettent de les déterminer :

$$\begin{cases} \text{h\_lim\_variat\_er\_stat} = \text{Tq\_Req\_Recal} + \text{Delta\_h} \\ \text{1\_lim\_variat\_er\_stat} = \text{Tq\_Req\_Recal} - \text{Delta\_1} \end{cases} \qquad (Eq.\ 7)$$

Avec :

Tq_Req_Recal : la somme de la requête de couple du conducteur et de l'erreur statique moyenne mesurée dans les instants « immédiatement précédents » le début d'une phase quasi-statique.

Delta_h : valeur de la borne supérieure de la variation d'erreur maximale tolérable par rapport à l'erreur mesurée au début de la phase quasi-statique.

Delta_1 : valeur de la borne inférieure de la variation d'erreur maximale tolérable par rapport à l'erreur mesurée au début de la phase quasi-statique.

L'équation suivante résume la détermination de la variable Tq_Req_Recal.

$$\text{Tq\_Req\_Recal} = \text{Tq\_Req} \cdot \left(1 + \frac{\text{mem\_perc\_err\_ave}}{100}\right) \qquad (Eq.\ 8)$$

Au début de la phase quasi-statique, la somme de la requête de couple du conducteur et de l'erreur statique moyenne mesurée dans les instants «immédiatement précédents» le début d'une phase quasi-statique Tq_Req_Recal représente le couple ressenti par le conducteur. Pendant la phase quasi-statique ce signal évolue de la même façon que la requête de couple du conducteur Tq_Req

Les variables Delta_h et Delta_1 fixent la variation d'erreur maximale tolérable, par rapport à l'erreur mesurée au début de la phase quasi-statique. Les équations suivantes résument la détermination des variables Delta_h et Delta_1 :

$$\begin{cases} \text{Delta\_h} = \max\left(\text{Cxx\_delta\_err\_tq\_min\_pos}; \text{Tq\_Req} \cdot \text{Ah}\right) \\ \text{Delta\_1} = \max\left(\text{Cxx\_delta\_err\_tq\_min\_pos}; \text{Tq\_Req} \cdot \text{Al}\right) \end{cases} \qquad (Eq.\ 9)$$

Avec

$$\begin{aligned} \text{Ah} &= \frac{\text{Cxx\_delta\_perc\_err\_init\_h\_pos} + \text{delta\_perc\_err\_augm\_h}}{100} \\ \text{Al} &= \frac{\text{Cxx\_delta\_perc\_err\_init\_1\_pos} + \text{delta\_perc\_err\_augm\_1}}{100} \end{aligned} \qquad (Eq.\ 10)$$

$$\begin{cases} \text{delta\_perc\_err\_augm\_h} = \min\left(\text{Cxx\_delta\_perc\_err\_max\_h\_pos}; \text{Bh}\right) \\ \text{delta\_perc\_err\_augm\_1} = \min\left(\text{Cxx\_delta\_perc\_err\_max\_1\_pos}; \text{Bl}\right) \end{cases}$$

$$Bh = \int_{T3} Cxx\_perc\_err\_drv\_tq\_h\_lim\_pos \cdot \partial t$$

$$Bl = \int_{T3} Cxx\_perc\_err\_drv\_tq\_l\_lim\_pos \cdot \partial t$$

T3= Durée de la phase quasi-statique. Les intégrales de calcul de Bh et de B1 sont remises à 0 lorsque la valeur perc_err_mem_t prend la valeur 1.

Cxx_delta_err_tq_min_pos : variation d'erreur acceptable dans le cas d'une requête de couple du conducteur positive,

Cxx_delta_perc_err_init_h_pos : variation d'erreur acceptable, en pourcentage de la requête de couple du conducteur, à l'instant de début de la phase quasi-statique ; pour la limite haute du gabarit de couple,

Cxx_delta_perc_err_init_1_pos : variation d'erreur acceptable, en pourcentage de la requête de couple du conducteur, à l'instant de début de la phase quasi-statique, pour la limite basse du gabarit de couple,

Cxx_perc_err_drv_tq_h_lim_pos : dérivée temporelle de l'erreur tolérable pour la limite haute du gabarit de couple,

Cxx_perc_err_drv_tq_1_lim_pos : dérivée temporelle de l'erreur tolérable pour la limite basse du gabarit de couple,

Cxx_delta_perc_err_max_h_pos : valeur de saturation supérieure du signal delta_perc_err_augm_h,

Cxx_delta_perc_err_max_1_pos : valeur de saturation inférieure du signal delta_perc_err_augm_1;

delta_perc_err_augm_h, delta_perc_err_augm_1 : augmentation tolérable dans le temps de l'erreur en pourcentage

I1 est à remarquer qu'une augmentation lente de l'erreur est acceptable car le conducteur a le temps de réagir pour la compenser. Le paramètre Cxx_perc_err_drv_tq_h_lim_pos permet de quantifier la vitesse d'augmentation tolérable de l'erreur dans le temps.

Egalement, Cxx_delta_perc_err_max_h_pos limite donc l'augmentation de Cxx_perc_err_drv_tq_1_lim_pos.

La combinaison des équations Eq. 5 à Eq. 10 permet d'obtenir la limite haute du gabarit h_lim_stc_pos et la limite basse du gabarit 1_lim_stc_pos.

Comme on l'a décrit précédemment, une anomalie de couple est détectée si l'estimation du couple réalisé par le moteur Tq_esti sort du gabarit formé par la limite haute du gabarit h_lim_stc_pos et la limite basse du gabarit 1_lim_stc_pos pendant une phase quasi-statique de la requête de couple du conducteur identifiée par exemple par la valeur du booléen de détection de phase de variation quasi-statique lorsque la requête de couple du conducteur est positive stc_tq_sp_pos. Plus précisément, lorsque la valeur du booléen stc_tq_sp_pos de détection de phase de variation quasi-statique lorsque la requête de couple du conducteur est positive indique qu'une telle phase est en cours, on détecte qu'une accélération intempestive a lieu si l'estimation de couple dépasse la limite haute du gabarit h_lim_stc_pos et on détecte qu'une perte de motricité a lieu si l'estimation de couple dévient inférieur à la limite basse du gabarit 1_lim_stc_pos.

Le booléen de détection d'une accélération intempestive lorsque la requête de couple du conducteur est positive noté Accel_intemp_nconf change alors de valeur. De même, le booléen de détection d'une situation de perte de motricité, Perte_motric_nconf change de valeur. Contrairement à la détection d'une accélération intempestive et d'une perte de motricité, un freinage intempestif est détecté indépendamment du gabarit de couple.

Un freinage intempestif est détecté si la requête de couple du conducteur Tq_req est positive, si la valeur du booléen de détection de phase de variation quasi-statique lorsque la requête de couple du conducteur est positive stc_tq_sp_pos correspond à la détection d'une telle phase et si l'estimation du couple réalisé par le moteur Tq_esti est, à la fois négative et inférieure au couple Cxx_tq_uex_brak en dessous duquel un freinage intempestif peut être détecté et inférieure à la requête de couple du conducteur Tq_req d'une valeur au moins égale à la différence de couple minimum Cxx_delta_tq_min_uex_brak entre la requête de couple du conducteur Tq_req et l'estimation du couple réalisé par le moteur Tq_esti pour pouvoir détecter un freinage intempestif.

Le moyen de détermination 4 de la cohérence du couple négatif réalise la vérification de la cohérence du couple pendant les phases où la requête de couple du conducteur est négative tout en variant de façon «peu dynamique». Le moyen de détermination 4 de la cohérence du couple négatif, illustré par la figure 4, comprend un moyen de détermination 7 des phases de variation quasi-statique de la requête négative et un deuxième moyen 8 de détection des anomalies de couple.

A la différence du moyen de détermination 5 des phases de variation quasi-statique de la requête positive, le moyen de détermination 7 des phases de variation quasi-statique de la requête négative réalise la reconnaissance des phases de variation quasi-statique de la requête de couple du conducteur dans le cas où la requête de couple du conducteur est négative. Le moyen de détermination 7 présente une structure similaire au moyen de détermination 5, et n'en diffère que par les signaux de sortie.

Le moyen de détermination 7 émet en sortie des signaux portant un booléen de détection de phase de variation quasi-statique lorsque la requête de couple du conducteur est négative, noté stc_tq_sp_neg, une valeur de pourcentage d'erreur moyen mesurée dans les instants «immédiatement précédents» le début d'une phase de variation quasi-statique de la requête de couple du conducteur, notée mem_perc_err_ave, et un booléen de mise à jour de la valeur de pourcentage d'erreur moyenne mesurée dans les instants «immédiatement précédents» le début d'une phase de variation quasi-statique de la requête de couple du conducteur noté perc_err_mem_t.

Le deuxième moyen 8 de détection des anomalies de couple, de façon similaire au premier moyen 6 de détection des anomalies de couple, permet de détecter des anomalies de couple. Dans le cas du deuxième moyen 8, les anomalies détectées sont une perte de freinage, un sur-freinage et une accélération intempestive dans le cas où la requête de couple du conducteur est négative.

Le deuxième moyen 8 reçoit en entrée la requête de couple du conducteur Tq_req, et l'estimation du couple réalisé par le moteur Tq_esti, et reçoit du moyen de détermination 7, un booléen de détection de phase de variation quasi-statique, noté stc_tq_sp_neg; une valeur de pourcentage d'erreur moyen mesurée dans les instants «immédiatement précédents» le début d'une phase de variation quasi-statique de la requête de couple du conducteur, notée mem_perc_err_ave, un booléen de mise à jour de la valeur de pourcentage d'erreur moyenne mesurée dans les instants «immédiatement précédents» le début d'une phase de variation quasi-statique de la requête de couple du conducteur noté perc_err_mem_t.

Le deuxième moyen 8 émet en sortie le booléen de détection d'une accélération intempestive lorsque la requête de couple du conducteur est négative, noté Accel_intemp_neg_nconf, le booléen de détection de la situation de sur-freinage, noté Surfrein_nconf, et le booléen de détection de la situation de perte de freinage, noté Perte_frein_nconf.

La construction du gabarit de couple acceptable dans le deuxième moyen 8 est réalisée d'une manière similaire à celle du premier moyen 6.

De même, la détection des anomalies de couple dans le deuxième moyen 8 est réalisée de façon similaire à la détection réalisée dans le premier moyen 6. Une anomalie de couple est détectée si l'estimation du couple réalisé par le moteur Tq_esti sort d'un gabarit de couple lorsque la requête de couple du conducteur est négative, pendant une phase quasi-statique de la requête de couple du conducteur, identifiée, par exemple, par la valeur du booléen stc_tq_sp_neg de détection de phase de variation quasi-statique lorsque la requête de couple du conducteur est négative.

Le gabarit de couple, lorsque la requête de couple du conducteur est négative, comprend une limite haute du gabarit de couple lorsque la requête de couple du conducteur est négative, notée h_lim_stc_neg et une limite basse du gabarit de couple lorsque la requête de couple du conducteur est négative, notée 1_lim_stc_neg.

Plus précisément, lorsque la valeur du booléen stc_tq_sp_neg de détection de phase de variation quasi-statique lorsque la requête de couple du conducteur est négative indique qu'une telle phase est en cours, on détecte qu'une perte de freinage a lieu si l'estimation de couple dépasse la limite haute du gabarit h_lim_stc_neg et on détecte qu'un sur-freinage a lieu si l'estimation de couple dévient inférieur à la limite basse du gabarit 1_lim_stc_neg.

Cela se traduit par le changement de valeur du booléen Perte_frein_nconf traduisant une perte de freinage et du booléen Surfrein_nconf traduisant un sur-freinage.

Contrairement à la perte de freinage et au sur-freinage, une accélération intempestive (en cas de requête de couple du conducteur négative) est détectée indépendamment du gabarit de couple.

Une accélération intempestive est détectée si la requête de couple du conducteur Tq_req est négative, si la valeur du booléen de détection de phase de variation quasi-statique lorsque la requête de couple du conducteur est négative stc_tq_sp_neg correspond à la détection d'une telle phase et si l'estimation du couple réalisé par le moteur Tq_esti est, à la fois, positive et supérieure au couple Cxx_tq_uex_acc_neg au dessus duquel une accélération intempestive peut être détectée, dans le cas d'une requête de couple du conducteur négative, et supérieure à la requête de couple du conducteur Tq_req d'une valeur au moins égale à la différence de couple minimum Cxx_delta_tq_min_uex_acc entre la requête de couple du conducteur Tq_req et l'estimation du couple réalisé par le moteur Tq_esti pour pouvoir détecter une accélération intempestive, dans le cas d'une requête de couple du conducteur négative.

Le procédé et le système décrits ci-dessus permettent de détecter des anomalies de couple entre le couple requis par le conducteur et le couple réalisé par le moteur du véhicule automobile. Une fois détectées, les anomalies de couple sont identifiées afin que les systèmes d'assistance à la conduite équipant le véhicule puissent appliquer une réponse adaptée à la situation.

**Revendications**

1. Système de surveillance du couple fourni par le moteur d'un véhicule automobile, notamment d'un véhicule électrique ou hybride, comprenant un moyen de détermination de la requête de couple du conducteur, un moyen d'estimation du couple réalisé par le groupe motopropulseur, un moyen de filtrage (1) de la requête de couple du conducteur connecté en entrée à un moyen de détermination (2) de la cohérence entre requête de couple et couple réalisé comprenant un moyen de détermination (3) de la cohérence du couple positif et un moyen de détermination (4) de la cohérence du couple négatif comprenant chacun :

- un moyen de détermination (5,7) des phases de variation quasi-statique de la requête, c'est-à-dire des phases pendant lesquelles la requête de couple du conducteur ne varie pas ou varie de façon peu dynamique, ledit moyen de détermination des phases de variation quasi-statique de la requête étant apte à déterminer un booléen de détection de phase de variation quasi-statique et une valeur de pourcentage d'erreur moyenne entre la requête de couple et l'estimation du couple réalisé, mesurée sur une période de durée mémorisée s'étendant avant le début d'une phase de variation quasi-statique de la requête de couple du conducteur en fonction notamment de la comparaison de la requête de couple du conducteur filtrée à un seuil mémorisé,
- et un moyen (6,8) de détection des anomalies de couple, apte à construire un gabarit de couple acceptable et à déterminer l'occurrence d'une anomalie de couple en fonction de l'estimation de couple, de la requête de couple et du gabarit de couple acceptable, dudit booléen de détection de phase de variation quasi-statique et de ladite valeur de pourcentage d'erreur moyenne entre la requête de couple et l'estimation du couple réalisé,

les moyens de détermination (5,7) des phases de variation quasi-statique de la requête recevant en entrée des signaux portant l'estimation du couple réalisé par le groupe motopropulseur, la requête de couple du conducteur, et la requête de couple du conducteur filtrée.

2. Système selon la revendication précédente, dans lequel les moyens (6,8) de détection des anomalies de couple sont aptes à construire chacun un gabarit de couple acceptable comprenant une limite haute et une limite basse en fonction de la requête de couple, de la valeur de pourcentage d'erreur moyen mesurée sur une période de durée mémorisée s'étendant avant le début d'une phase de variation quasi-statique de la requête de couple du conducteur et de paramètres mémorisés relatifs à l'erreur acceptable et à la variation d'erreur acceptable existant entre la requête de couple et l'estimation de couple.

3. Système selon la revendication 2, dans lequel un premier moyen (6) de détection des anomalies de couple est apte à détecter une perte de motricité, un freinage intempestif et une accélération intempestive dans le cas où la requête de couple du conducteur est positive en fonction de la requête de couple du conducteur, de l'estimation du couple réalisé par le groupe motopropulseur, d'un booléen de détection de phase de variation quasi-statique, d'une valeur de pourcentage d'erreur moyen mesurée sur une période de durée mémorisée s'étendant avant le début d'une phase de variation quasi-statique de la requête de couple du conducteur, d'un booléen de mise à jour de la valeur de pourcentage d'erreur moyenne mesurée sur une période de durée mémorisée s'étendant avant le début d'une phase de variation quasi-statique de la requête de couple du conducteur et du gabarit de couple acceptable.

4. Système selon l'une quelconque des revendications 2 ou 3, dans lequel un deuxième moyen (8) de détection des anomalies de couple est apte à détecter une accélération intempestive dans le cas où la requête de couple du conducteur est négative, un sur-freinage, et une perte de freinage en fonction de la requête de couple du conducteur, de l'estimation du couple réalisé par le groupe motopropulseur, et du booléen de détection de phase de variation quasi-statique, de la valeur de pourcentage d'erreur moyen mesurée sur une période de durée mémorisée s'étendant avant le début d'une phase de variation quasi-statique de la requête de couple du conducteur, du booléen de mise à jour de la valeur de pourcentage d'erreur moyenne mesurée sur une période de durée mémorisée s'étendant avant le début d'une phase de variation quasi-statique de la requête de couple du conducteur et du gabarit de couple acceptable.

5. Procédé de surveillance du couple fourni par le moteur d'un véhicule automobile notamment d'un véhicule électrique ou hybride, comprenant les étapes suivantes :

on détermine la requête de couple du conducteur,
on estime le couple réalisé par le groupe motopropulseur,
on filtre la requête de couple du conducteur,
on détermine l'occurrence d'une phase de variation quasi-statique de la requête de couple, c'est-à-dire d'une phase pendant laquelle la requête de couple du conducteur ne varie pas ou varie de façon peu dynamique,
on détermine un gabarit de couple comprenant une limite haute et une limite basse en fonction de la requête de couple, de la valeur de pourcentage d'erreur moyenne entre la requête de couple et l'estimation du couple réalisé, mesurée sur une période de durée mémorisée s'étendant avant le début d'une phase de variation quasi-statique de la requête de couple du conducteur et de paramètres mémorisés relatifs à l'erreur acceptable et à la variation d'erreur acceptable existant entre la requête de couple et l'estimation de couple, puis lors d'une phase de variation quasi-statique de la requête de couple, on détermine qu'une anomalie de couple est présente en fonction de l'estimation de couple, de la requête de couple et du gabarit de couple acceptable.

**6.** Procédé selon la revendication 5, dans lequel lors d'une phase de variation quasi-statique lorsque la requête de couple du conducteur est positive, si l'estimation de couple dépasse la limite haute du gabarit, on détermine que l'anomalie de couple détectée est une accélération intempestive lorsque la requête de couple du conducteur est positive.

**7.** Procédé selon l'une quelconque des revendications 5 ou 6, dans lequel lors d'une phase de variation quasi-statique lorsque la requête de couple du conducteur est positive si l'estimation de couple dévient inférieur à la limite basse du gabarit, on détermine que l'anomalie de couple détectée est une perte de motricité.

**8.** Procédé selon l'une quelconque des revendications 5 à 7, dans lequel, lors d'une phase de variation quasi-statique lorsque la requête de couple du conducteur est négative, si l'estimation de couple dévient inférieur à la limite basse du gabarit, on détermine que l'anomalie de couple détectée est un sur-freinage.

**9.** Procédé selon l'une quelconque des revendications 5 à 8, dans lequel, lors d'une phase de variation quasi-statique lorsque la requête de couple du conducteur est négative, si l'estimation de couple dépasse la limite haute du gabarit, on détermine que l'anomalie de couple détectée est une perte de freinage.

**10.** Procédé selon l'une quelconque des revendications 5 à 9, dans lequel, lors d'une phase de variation quasi-statique lorsque la requête de couple du conducteur est positive et si l'estimation du couple réalisé par le groupe motopropulseur est, à la fois négative et inférieure à un seuil spécifique au cas d'une requête de couple du conducteur positive et inférieure à la requête de couple du conducteur d'une valeur au moins égale à la valeur d'un autre seuil spécifique au cas d'une requête de couple du conducteur positive, on détermine que l'anomalie de couple est un freinage intempestif.

**11.** Procédé selon l'une quelconque des revendications 5 à 10, dans lequel, lors d'une phase de variation quasi-statique lorsque la requête de couple du conducteur est négative et si l'estimation du couple réalisé par le groupe motopropulseur est, à la fois, positive et supérieure à un seuil spécifique au cas d'une requête de couple du conducteur négative, et supérieure à la requête de couple du conducteur d'une valeur au moins égale à la valeur d'un autre seuil spécifique au cas d'une requête de couple du conducteur négative, on détermine que l'anomalie de couple est une accélération intempestive.

**Patentansprüche**

**1.** System zur Überwachung des vom Motor eines Kraftfahrzeugs, insbesondere eines Elektro- oder Hybridfahrzeugs, erzeugten Drehmoments, umfassend ein Mittel zur Bestimmung der Drehmomentanforderung des Fahrers, ein Mittel zur Schätzung des vom Antriebsaggregat erzeugten Drehmoments, ein Mittel zur Filterung (1) der Drehmomentanforderung des Fahrers, das am Eingang mit einem Mittel zur Bestimmung (2) der Kohärenz zwischen Drehmomentanforderung und erzeugtem Drehmoment verbunden ist, das ein Mittel zur Bestimmung (3) der Kohärenz des positiven Moments und ein Mittel zur Bestimmung (4) der Kohärenz des negativen Moments umfasst, die jeweils umfassen:

- ein Mittel zur Bestimmung (5, 7) der Phasen quasi-statischer Variation der Anforderung, das heißt der Phasen, während der die Drehmomentanforderung des Fahrers nicht variiert oder auf eine wenig dynamische Weise variiert, wobei das Mittel zur Bestimmung der Phasen quasi-statischer Variation der Anforderung geeignet ist, eine Boolesche Variable der Erkennung einer Phase quasi-statischer Variation und einen Prozentwert des mittleren Fehlers zwischen der Drehmomentanforderung und der Schätzung des erzeugten Drehmoments, der über einem sich vor dem Beginn einer Phase quasi-statischer Variation der Drehmomentanforderung des Fahrers erstreckenden Zeitraum von gespeicherter Dauer gemessen wurde, zu bestimmen, insbesondere in Abhängigkeit von dem Vergleich der gefilterten Drehmomentanforderung des Fahrers mit einem gespeicherten Schwellenwert,
- und ein Mittel (6, 8) zur Erkennung der Drehmomentanomalien, das geeignet ist, einen annehmbaren Drehmomentbereich zu konstruieren und das Auftreten einer Drehmomentanomalie in Abhängigkeit von der Drehmomentschätzung, der Drehmomentanforderung und dem annehmbaren Drehmomentbereich, der Booleschen Variablen der Erkennung einer Phase quasi-statischer Variation und dem Prozentwert des mittleren Fehlers zwischen der Drehmomentanforderung und der Schätzung des erzeugten Drehmoments zu bestimmen,

wobei die Mittel zur Bestimmung (5, 7) der Phasen quasi-statischer Variation der Anforderung am Eingang Signale empfangen, welche die Schätzung des vom Antriebsaggregat erzeugten Drehmoments, die Drehmomentanforderung des Fahrers und die gefilterte Drehmomentanforderung des Fahrers betreffen.

2. System nach dem vorhergehenden Anspruch, wobei die Mittel (6, 8) zur Erkennung der Drehmomentanomalien geeignet sind, jeweils einen annehmbaren Drehmomentbereich, der einen oberen Grenzwert und einen unteren Grenzwert umfasst, in Abhängigkeit von der Drehmomentanforderung, von dem Prozentwert des mittleren Fehlers, der über einem sich vor dem Beginn einer Phase quasi-statischer Variation der Drehmomentanforderung des Fahrers erstreckenden Zeitraum von gespeicherter Dauer gemessen wurde, und von gespeicherten Parametern, die den annehmbaren Fehler und die Variation des annehmbaren Fehlers betreffen, der zwischen der Drehmomentanforderung und der Drehmomentschätzung vorhanden ist, zu konstruieren.

3. System nach Anspruch 2, wobei ein erstes Mittel (6) zur Erkennung der Drehmomentanomalien geeignet ist, einen Verlust an Antriebskraft, eine unangebrachte Bremsung und eine unangebrachte Beschleunigung in dem Fall, wenn die Drehmomentanforderung des Fahrers positiv ist, in Abhängigkeit von der Drehmomentanforderung des Fahrers, von der Schätzung des vom Antriebsaggregat erzeugten Drehmoments, von einer Booleschen Variablen der Erkennung einer Phase quasi-statischer Variation, von einem Prozentwert des mittleren Fehlers, der über einem sich vor dem Beginn einer Phase quasi-statischer Variation der Drehmomentanforderung des Fahrers erstreckenden Zeitraum von gespeicherter Dauer gemessen wurde, von einer Booleschen Variablen der Aktualisierung des Prozentwertes des mittleren Fehlers, der über einem sich vor dem Beginn einer Phase quasi-statischer Variation der Drehmomentanforderung des Fahrers erstreckenden Zeitraum von gespeicherter Dauer gemessen wurde, und von dem annehmbaren Drehmomentbereich zu erkennen.

4. System nach einem der Ansprüche 2 oder 3, wobei ein zweites Mittel (8) zur Erkennung der Drehmomentanomalien geeignet ist, eine unangebrachte Beschleunigung in dem Fall, in dem Fall, wenn die Drehmomentanforderung des Fahrers negativ ist, eine übermäßig starke Bremsung und einen Verlust an Bremskraft in Abhängigkeit von der Drehmomentanforderung des Fahrers, von der Schätzung des vom Antriebsaggregat erzeugten Drehmoments und von der Booleschen Variablen der Erkennung einer Phase quasi-statischer Variation, von dem Prozentwert des mittleren Fehlers, der über einem sich vor dem Beginn einer Phase quasi-statischer Variation der Drehmomentanforderung des Fahrers erstreckenden Zeitraum von gespeicherter Dauer gemessen wurde, von der Booleschen Variablen der Aktualisierung des Prozentwertes des mittleren Fehlers, der über einem sich vor dem Beginn einer Phase quasi-statischer Variation der Drehmomentanforderung des Fahrers erstreckenden Zeitraum von gespeicherter Dauer gemessen wurde, und von dem annehmbaren Drehmomentbereich zu erkennen.

5. Verfahren zur Überwachung des vom Motor eines Kraftfahrzeugs, insbesondere eines Elektro- oder Hybridfahrzeugs, erzeugten Drehmoments, die folgenden Schritte umfassend:

Bestimmen der Drehmomentanforderung des Fahrers, Schätzen des vom Antriebsaggregat erzeugten Drehmoments,
Filtern der Drehmomentanforderung des Fahrers, Bestimmen des Auftretens einer Phase quasi-statischer Variation der Drehmomentanforderung, das heißt einer Phase, während der die Drehmomentanforderung des Fahrers nicht variiert oder auf eine wenig dynamische Weise variiert,
Bestimmen eines Drehmomentbereichs, der einen oberen Grenzwert und einen unteren Grenzwert umfasst, in Abhängigkeit von der Drehmomentanforderung, von dem Prozentwert des mittleren Fehlers zwischen der Drehmomentanforderung und der Schätzung des erzeugten Drehmoments, der über einem sich vor dem Beginn einer Phase quasi-statischer Variation der Drehmomentanforderung des Fahrers erstreckenden Zeitraum von gespeicherter Dauer gemessen wurde, und von gespeicherten Parametern, die den annehmbaren Fehler und die Variation des annehmbaren Fehlers betreffen, der zwischen der Drehmomentanforderung und der Drehmomentschätzung vorhanden ist, danach, während einer Phase quasi-statischer Variation der Drehmomentanforderung, Bestimmen, ob eine Drehmomentanomalie vorhanden ist, in Abhängigkeit von der Drehmomentschätzung, der Drehmomentanforderung und dem annehmbaren Drehmomentbereich.

6. Verfahren nach Anspruch 5, wobei während einer Phase quasi-statischer Variation, wenn die Drehmomentanforderung des Fahrers positiv ist, falls die Drehmomentschätzung den oberen Grenzwert des Bereichs überschreitet, bestimmt wird, dass die erkannte Drehmomentanomalie eine unangebrachte Beschleunigung ist, wenn die Drehmomentanforderung des Fahrers positiv ist.

7. Verfahren nach einem der Ansprüche 5 oder 6, wobei während einer Phase quasi-statischer Variation, wenn die Drehmomentanforderung des Fahrers positiv ist, falls die Drehmomentschätzung kleiner als der untere Grenzwert des Bereichs wird, bestimmt wird, dass die erkannte Drehmomentanomalie ein Verlust an Antriebskraft ist.

8. Verfahren nach einem der Ansprüche 5 bis 7, wobei während einer Phase quasi-statischer Variation, wenn die Drehmomentanforderung des Fahrers negativ ist, falls die Drehmomentschätzung kleiner als der untere Grenzwert des Bereichs wird, bestimmt wird, dass die erkannte Drehmomentanomalie eine übermäßig starke Bremsung ist.

9. Verfahren nach einem der Ansprüche 5 bis 8, wobei während einer Phase quasi-statischer Variation, wenn die Drehmomentanforderung des Fahrers negativ ist, falls die Drehmomentschätzung den oberen Grenzwert des Bereichs überschreitet, bestimmt wird, dass die erkannte Drehmomentanomalie ein Verlust an Bremskraft ist.

10. Verfahren nach einem der Ansprüche 5 bis 9, wobei während einer Phase quasi-statischer Variation, wenn die Drehmomentanforderung des Fahrers positiv ist, und falls die Schätzung des vom Antriebsaggregat erzeugten Drehmoments gleichzeitig negativ und kleiner als ein für den Fall einer positiven Drehmomentanforderung des Fahrers spezifischer Schwellenwert ist und um einen Wert kleiner als die Drehmomentanforderung des Fahrers ist, der wenigstens gleich dem Wert eines anderen für den Fall einer positiven Drehmomentanforderung des Fahrers spezifischen Schwellenwertes ist, bestimmt wird, dass die Drehmomentanomalie eine unangebrachte Bremsung ist.

11. Verfahren nach einem der Ansprüche 5 bis 10, wobei während einer Phase quasi-statischer Variation, wenn die Drehmomentanforderung des Fahrers negativ ist, und falls die Schätzung des vom Antriebsaggregat erzeugten Drehmoments gleichzeitig positiv und größer als ein für den Fall einer negativen Drehmomentanforderung des Fahrers spezifischer Schwellenwert ist und um einen Wert größer als die Drehmomentanforderung des Fahrers ist, der wenigstens gleich dem Wert eines anderen für den Fall einer negativen Drehmomentanforderung des Fahrers spezifischen Schwellenwertes ist, bestimmt wird, dass die Drehmomentanomalie eine unangebrachte Beschleunigung ist.

## Claims

1. System for monitoring the torque supplied by the motor of a motor vehicle, notably of an electric or hybrid vehicle, comprising a means for determining the driver's torque request, a means for estimating the torque produced by the propulsion unit, a means (1) for filtering the driver's torque request which is connected at an input to a means (2) for determining the consistency between the torque request and the torque produced, comprising a means (3) for determining the consistency of the positive torque and a means (4) for determining the consistency of the negative torque, each comprising:

   - a means (5, 7) for determining quasi-static variation phases of the request, that is to say phases during which the driver's torque request does not vary or varies in a low-dynamic fashion, said means for determining the quasi-static variation phases of the request being able to determine a Boolean for detecting the quasi-static variation phase and a mean value of the error percentage between the torque request and the estimate of the torque produced, measured over a period of set duration extending before the start of a quasi-static variation phase of the driver's torque request, as a function in particular of the comparison of the filtered driver's torque request with a set threshold,
   - and a means (6, 8) for detecting torque anomalies, which is able to construct an acceptable torque template and to determine the occurrence of a torque anomaly as a function of the torque estimate, the torque request and the acceptable torque template, said Boolean for detecting the quasi-static variation phase and said mean value of the error percentage between the torque request and the estimate of the torque produced,

   the means (5,7) for determining the quasi-static variation phases of the request receiving, as input, signals carrying the estimate of the torque produced by the propulsion unit, the driver's torque request and the filtered driver's torque request.

2. System according to the preceding claim, **characterized in that** the means (6,8) for detecting torque anomalies are each able to construct an acceptable torque template comprising an upper limit and a lower limit as a function of the torque request, the value of the mean error percentage measured over a period of set duration extending before the start of a quasi-static variation phase of the driver's torque request, and memorized parameters relating to the acceptable error and the acceptable error variation existing between the torque request and the torque estimate.

3. System according to Claim 2, **characterized in that** a first means (6) for detecting torque anomalies is able to detect a loss of propulsion, an untimely braking and an untimely acceleration in the case where the driver's torque request is positive as a function of the driver's torque request, the estimate of the torque produced by the propulsion unit, a Boolean for detecting the quasi-static variation phase, a value of the mean error percentage measured over a period of set duration extending before the start of a quasi-static variation phase of the driver's torque request, and a Boolean for updating the mean value of the error percentage measured over a period of set duration extending before the start of a quasi-static variation phase of the driver's torque request, and the acceptable torque template.

4. System according to either one of Claims 2 and 3, **characterized in that** a second means (8) for detecting torque anomalies is able to detect an untimely acceleration in the case where the driver's torque request is negative, an overbraking, and a loss of braking as a function of the driver's torque request, the estimate of the torque produced by the propulsion unit, and the Boolean for detecting the quasi-static variation phase, the value of the mean error percentage measured over a period of set duration extending before the start of a quasi-static variation phase of the driver's torque request, a Boolean for updating the mean value of the error percentage measured over a period of set duration extending before the start of a quasi-static variation phase of the driver's torque request, and the acceptable torque template.

5. Method for monitoring the torque supplied by the motor of a motor vehicle, notably of an electric or hybrid vehicle, comprising the following steps:

> determination of the driver's torque request,
> estimation of the torque produced by the propulsion unit,
> filtration of the driver's torque request,
> determination of the occurrence of a quasi-static variation phase of the torque request, that is to say a phase during which the driver's torque request does not vary or varies in a low-dynamic fashion,
> determination of a torque template comprising an upper limit and a lower limit as a function of the torque request, the mean value of the error percentage between the torque request and the estimate of the torque produced, measured over a period of set duration extending before the start of a quasi-static variation phase of the driver's torque request, and memorized parameters relative to the acceptable error and acceptable error variation existing between the torque request and the torque estimate, then during a quasi-static variation phase of the torque request, determination that a torque anomaly is present as a function of the torque estimate, the torque request and the acceptable torque template.

6. Method according to Claim 5, **characterized in that** during a quasi-static variation phase when the driver's torque request is positive, if the torque estimate exceeds the upper template limit, it is determined that the torque anomaly detected is an untimely acceleration when the driver's torque request is positive.

7. Method according to either one of Claims 5 and 6, **characterized in that** during a quasi-static variation phase when the driver's torque request is positive, if the torque estimate falls below the lower template limit, it is determined that the torque anomaly detected is a loss of propulsion.

8. Method according to any one of Claims 5 to 7, **characterized in that** during a quasi-static variation phase when the driver's torque request is negative, if the torque estimate falls below the lower template limit, it is determined that the torque anomaly detected is an overbraking.

9. Method according to any one of Claims 5 to 8, **characterized in that** during a quasi-static variation phase when the driver's torque request is negative, if the torque estimate exceeds the upper template limit, it is determined that the torque anomaly detected is a loss of braking.

10. Method according to any one of Claims 5 to 9, **characterized in that** during a quasi-static variation phase when the driver's torque request is positive, and if the estimate of torque produced by the propulsion unit is both negative and below a specific threshold for the case of a positive driver's torque request, and less than the driver's torque request by a value at least equal to the value of another specific threshold for the case of a positive driver's torque request, it is determined that the torque anomaly is an untimely braking.

**11.** Method according to any one of Claims 5 to 10, **characterized in that** during a quasi-static variation phase when the driver's torque request is negative, and if the estimate of torque produced by the propulsion unit is both positive and above a specific threshold for the case of a negative driver's torque request, and greater than the driver's torque request by a value at least equal to the value of another specific threshold for the case of a negative driver's torque request, it is determined that the torque anomaly is an untimely acceleration.

## FIG.1

| Tq_esti | Accel_intemp_nconf |
| Tq_req | Perte_motric_nconf |
| | Freinage_intemp_nconf |
| | Perte_frein_nconf |
| | Surfrein_nconf |
| Tq_req_highp_ftrd | Accel_intemp_neg_nconf |

1

2

## FIG.2

3

| Tq_req | Accel_intemp_nconf |
| Tq_esti | Perte_motric_nconf |
| Tq_req_highp_ftrd | Freinage_intemp_nconf |

| Tq_req | Perte_frein_nconf |
| Tq_esti | Surfrein_nconf |
| Tq_req_highp_ftrd | Accel_intemp_neg_nconf |

4

2

FIG.3

## FIG.4

Tq_req       Perte_frein_nconf

Tq_esti

Tq_esti     Mem_perc_err_ave → Mem_perc_err_ave      Surfrein_nconf

Tq_req       Stc_tq_sp_neg → Stc_tq_sp_neg

Tq_req_highp_ftrd   Perc_err_mem_t → Perc_err_mem_t   Accel_intemp_neg_nconf

7

8

4

**RÉFÉRENCES CITÉES DANS LA DESCRIPTION**

**Documents brevets cités dans la description**

- US 2009066281 A
- US 2005050965 A
- US 2010042276 A
- US 20050000276 A
- FR 1254994